# EUROPÄISCHE PATENTSCHRIFT

(11) **EP 0 866 300 B1**
(45) Veröffentlichungstag und Bekanntmachung des Hinweises auf die Patenterteilung: **19.02.2003**
(21) Anmeldenummer: 98104854.9
(22) Anmeldetag: 18.03.1998
(51) Int. Cl.: F28D 9/00, F28F 9/02, F28F 9/04

(54) **Getriebeölkühler**
Transmission oil cooler
Refroidisseur d'huile de transmission

(30) Priorität: 18.03.1997 DE 19711259
(43) Veröffentlichungstag der Anmeldung: 23.09.1998
(60) Teilanmeldung: 02026626.8
(73) Patentinhaber: Behr GmbH & Co., 70469 Stuttgart (DE)
(72) Erfinder: Grüner,Andreas, 73110 Hattenhofen (DE); Fink,Rolf, 75428 Illingen (DE)

(56) Entgegenhaltungen:
- DE-A- 2 612 416
- DE-A- 19 652 639
- DE-A- 19 652 782
- FR-A- 2 549 593
- FR-A- 2 582 076
- US-A- 4 538 679
- PATENT ABSTRACTS OF JAPAN vol. 017, no. 068 (M-1365), 10. Februar 1993 -& JP 04 273995 A (NIPPONDENSO CO LTD), 30. September 1992

## Beschreibung

Die Erfindung betrifft einen Getriebeölkühler mit einem länglichen Wärmetauschkörper, der zum Einbau in den Innenraum eines Wasserkastens eines Motorkühlers mit seitlich abragenden Anschlußstutzen versehen ist, die mit je einer Schraubflanschanordnung abgedichtet in einer Öffnung einer Seitenwand des Wasserkastens befestigbar sind.

Getriebeölkühler sind aus der EP 01 96 257 A1 bekannt. Die dort gezeigten Getriebeölkühler sind, um den Einbauraum des Wasserkastens so klein wie möglich zu halten, mit ihren Anschlußstutzen durch seitliche Öffnungen in der Seitenwand des Wasserkastens geführt, die groß genug ausgebildet sind, um ein Schwenken der Anschlußstutzen in die Öffnungen zu ermöglichen, nachdem sie zunächst mit dem Wärmetauschkörper des Getriebeölkühlers gemeinsam von der freien Seite des Wasserkastens aus mit in der Einschieberichtung ausgerichteten Achsen eingeschoben werden. Bei diesen Bauarten muß die zunächst sehr groß ausgebildete Einführöffnung für die Anschlußstutzen anschließend von einem Deckel geschlossen werden, an dem die Anschlußstutzen befestigt werden und der mit dem übrigen Wasserkastengehäuse fest verbunden, beispielsweise verschweißt wird. Dieser Montagevorgang ist aufwendig, auch deshalb, weil an einem auf der Innenseite des Wasserkastens an den Anschlußstutzen angeordneten Ringflansch eine Dichtung vorgesehen sein muß, deren Lage während des Befestigungsvorganges der Anschlußstutzen nicht mehr kontrollierbar ist.

Ein Getriebeölkühler der eingangs genannten Art ist auch aus dem Dokument DE-A 26 12 416 bekannt, das eine Kühlvorrichtung zeigt, die aus einem Hohlrohr besteht, das in den Innenraum eines Wasserkastens eingebaut ist. Der ringförmige Hohlraum der Kühlvorrichtung ist dabei endseitig durch einen ringförmigen Abschlussstutzen abgedichtet, der jedoch, zumindest an einer Stelle, zum Innenraum des Hohlrohres offen ist und dort mit dem inneren Teil einer Schraubflanschanordnung versehen ist, die aus diesem Innenteil und einem von außen in das Innengewinde des Innenteils eingeschraubten Schlauchstutzen mit einem Flansch besteht. Der Innenteil der Schraubanordnung besitzt ebenfalls einen abstehenden Flansch, und zwischen den beiden Flanschen des Schlauchstutzesn und des Innenteils sind zwei Gummiringe dicht eingespannt, die den Innenrand einer Öffnung in einer Seitenwand des Wasserkastens umgreifen. Zur Montage muss einer der beiden Dichtringe dem Flansch des inneren Schraubstutzens zugeordnet werden, während der andere Dichtring mit dem Schlauchstutzen von außen an den inneren Dichtring anschließend aufgesetzt wird, so dass sich beide Dichtringe nach der Verschraubung eng an die Öffnung der Seitenwand anlegen können.

Eine solche Ausgestaltung macht eine relativ aufwendige Montage erforderlich und gibt wegen des an der Innenseite anzuordnenden Dichtringes auch nicht in allen Fällen die Gewähr für die notwendige Dichtheit. Dazu kommt, dass eine solche Schraubflanschanordnung sich nicht ohne weiteres verwenden lässt, wenn anstelle eines Doppelrohrkühlers ein Plattenwärmetauscher eingesetzt werden soll.

Der vorliegenden Erfindung liegt daher die Aufgabe zugrunde, einen Getriebeölkühler der eingangs genannten Art so auszubilden, dass sich die Schraubflanschanordnung in wesentlich einfacherer Weise montieren lässt und auch für einen Getriebeölkühler geeignet ist, der aus mehreren parallel zueinander angeordneten Platten aufgebaut ist.

Zur Lösung dieser Aufgabe wird bei einem Getriebölkühler der eingangs genannten Art vorgesehen, dass der Wärmetauschkörper aus mehreren parallel zueinander ausgerichteten und auf Abstand gehaltenen Platten aufgebaut ist und nach außen von Endplatten abgedeckt ist, dass eine der Endplatten im Bereich der Öffnung mit ihrer Außenfläche mit der Innenfläche der Seitenwand fluchtet und an ihrer Innenfläche mit einem Gewindering verbunden ist und dass die Schraubflanschanordnung aus dem Gewindering und einer mit diesem verschraubbaren Hohlschraube besteht, die durch die Seitenwand des Wasserkastens ragt und außen mit ihrem einen Flansch bildenden Kopf gegen einen in die Öffnung der Seitenwand eingesetzten Dichtungsring drückt, der sich an der Außenfläche der Endplatte und am Gewindering anlegt.

Durch diese Ausgestaltung braucht zum einen der Einbauraum innerhalb des Wasserkastens nicht größer zu sein als bei der eingangs genannten Getriebeölkühlerbauart. Bei der Montage wird aber, da keine Anschlussstutzen geschwenkt und mit Deckeln verbunden werden müssen, eine viel einfachere Arbeitsweise ermöglicht. Dies gilt auch dann, wenn, wie vorher erwähnt, eine Schraubflanschanordnung bestehend aus zwei Dichtungsringhälften verwendet wird, von denen ein Dichtungsring in umständlicher Weise innen angelegt werden muss.

Durch die erfindungsgemäße Ausgestaltung ist es lediglich notwendig, die Hohlschrauben von außen durch je eine Öffnung in der Seitenwand des Wasserkastens zur Fixierung des innenliegenden Getriebeölkühlers durchzuführen. Der Dichtungsring selbst wird dabei ausschließlich von außen angelegt, was alle Probleme während des Montagevorganges ausschließt.

In Weiterbildung der Erfindung kann der Dichtungsring an einer Ringfläche des Gewinderinges anliegen. Vorteilhaft kann er auf einen Ansatz der Hohlschraube aufgeschoben sein und in die Durchführöffnung der Seitenwand des Wasserkastens hereinragen. Seine Montage wird damit äußerst einfach, denn der Dichtungsring kann auf diese Weise von außen her zusammen mit der Hohlschraube angebracht werden, dichtet dennoch sowohl gegenüber dem Gehäuse als auch gegenüber dem Getriebeölkühler ab, so dass nur ein Dichtungsring erforderlich ist.

In Weiterbildung der Erfindung kann der Gewindering unter Zwischenfügung einer Dichtung an der Trennwand zwischen einer öldurchströmten und der äußersten von Kühlmittel durchströmten Kammer des Wärmetauschkörpers angebracht sein und eine umlaufende Nut zum Einsetzen der Außenschale des Wärmetauschkörpers aufweisen.

In Weiterbildung der Erfindung kann diese Nut am Fuß des Dichtkragens angeordnet sein, so daß auf diese Weise sowohl eine einwandfreie Fixierung des Wärmetauschkörpers gegenüber dem Gewindering, als auch die sichere Anlage des Dichtungsringes am Gewindering gewährleistet ist.

Die Erfindung ist in der Zeichnung anhand von Ausführungsbeispielen dargestellt und wird im folgenden erläutert. Es zeigen:
- Fig. 1: Die Seitenansicht eines erfindungsgemäß ausgestalteten Getriebeölkühlers,
- Fig. 2: den Schnitt durch den Getriebeölkühler der Fig. 1 längs der Linie II-II,
- Fig. 3: die Stirnansicht des Getriebeölkühlers der Fig. 1 in Richtung des Pfeiles III der Fig. 1 gesehen,
- Fig. 4: eine vergrößerte Darstellung des für die Herstellung des Getriebeölkühlers nach den Fig. 1 und 2 verwendeten Gewinderinges,
- Fig. 5: eine vergrößerte Teildarstellung des linken Endes des Getriebeölkühlers der Fig. 2, jedoch im eingebauten Zustand innerhalb eines Wasserkastens eines Motorkühlers,
- Fig. 6: eine Darstellung des Anschlußbereiches ähnlich Fig. 5, jedoch bei einer Variante einer Ausführungsform nach der Erfindung und
- Fig. 7: die Draufsicht auf die bei der Ausführungsform der Fig. 6 verwendete Doppelringdichtung, wobei der in Fig. 6 gezeigte darüberliegende Flanschteil einer Hohlschraube weggelassen ist,

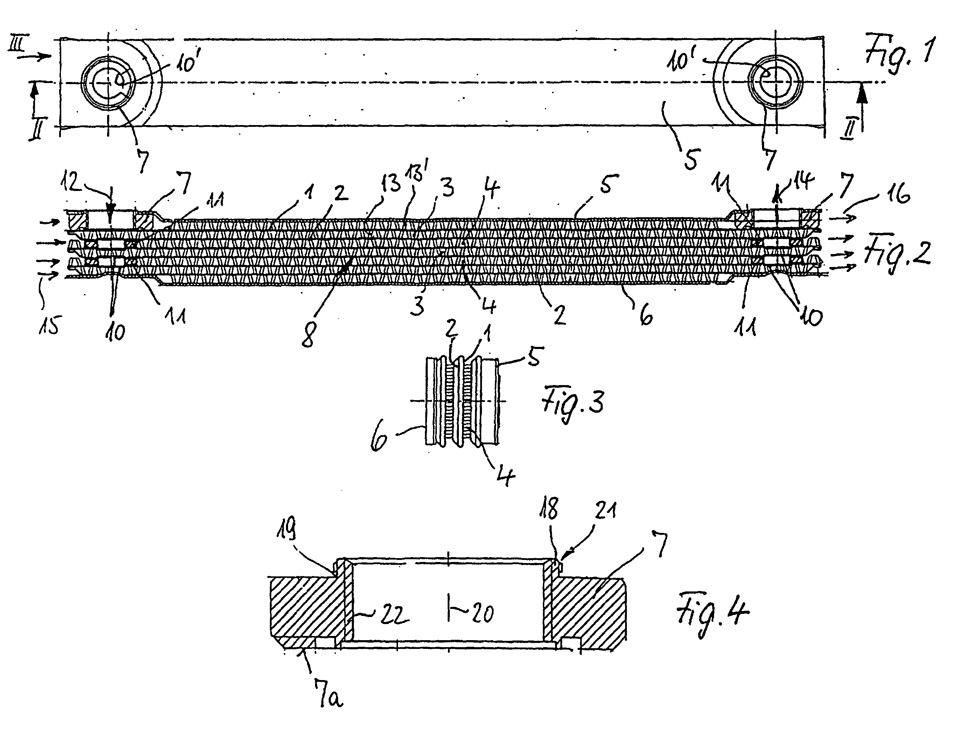

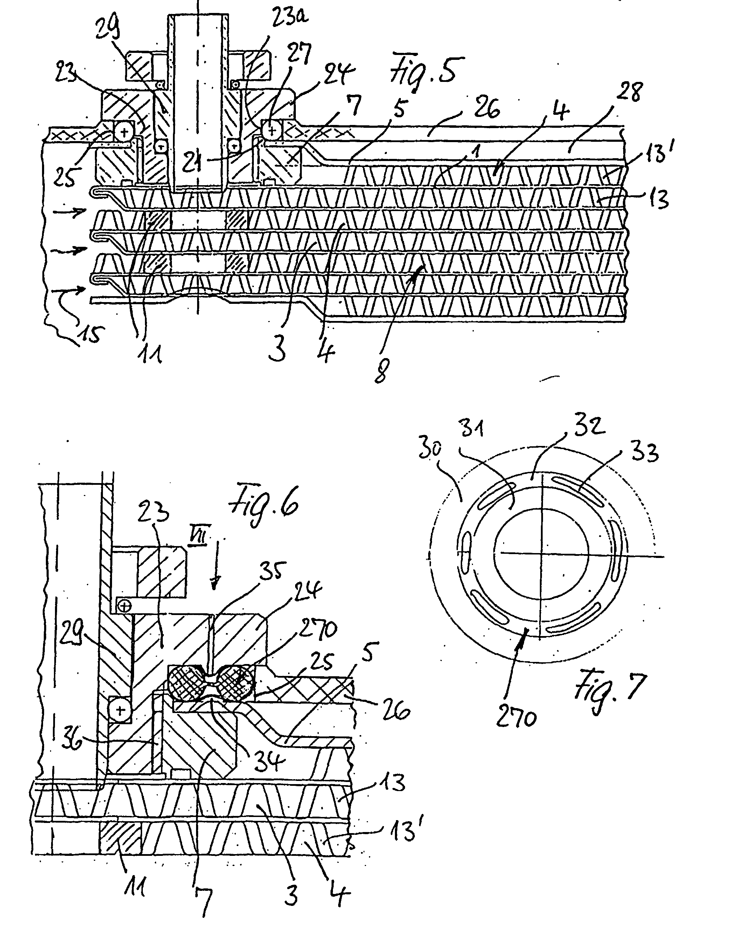

In den Fig. 1 bis 3 ist ein Getriebölkühler gezeigt, der aus mehreren parallel zueinander ausgerichteten, aber auf Abstand gehaltenen länglichen Platten 1 bzw. 2 aus Metall, insbesondere aus Aluminium, aufgebaut ist. Die Platten 1 und 2 sind jeweils in nicht näher erläuterten, weil bekannter Weise, an ihren umlaufenden Rändern dicht verbunden und bilden daher jeweils zwischen sich Kammern 3 und 4, die jeweils von verschiedenen Medien durchströmt sind. Beim Ausführungsbeispiel sind drei der Platten 1 und drei der Platten 2 vorgesehen, die nach außen hin von Endplatten 5 bzw. 6 abgedeckt werden, von denen die Platte 5 jeweils an ihren Enden abgeknickt ist und dicht mit je einem Gewindering 7 verbunden ist, der auf seiner anderen Seite dicht mit der ersten der Platten 1 verbunden ist. Die Platte 6 wiederum schließt den Wärmetauschkörper 8 des Getriebeölkühlers nach unten ab. Sie ragt dabei mit zwei Ausprägungen 9 in Öffnungen der untersten Platte 2 herein, die mit Öffnungen 10 in allen darüberliegenden Platten 1 und 2 fluchten. Die Platten 1 und 2 sind, wie vorher bereits ausgeführt, an ihren umlaufenden Rändern dicht miteinander verbunden und die so gebildeten Hohlschalen sind unter Zwischenfügung von Abstandsringen 11 aufeinandergefügt, wobei diese Abstandsringe 11 jeweils die Öffnungen 10 umgeben, so daß die auf diese Weise wechselweise zwischen den Platten 1 und 2 gebildeten Kammern 3 und 4 jeweils unterschiedliche Zu- und Abführungen besitzen. Die Zuführung zu den Kammern 3 erfolgt dabei jeweils durch die Öffnung des linken Gewinderinges 7, so, daß im Sinn des Pfeiles 12 das zu kühlende Öl jeweils in alle Kammern 3 eintreten kann, die untereinander durch die Öffnungen 10 in Verbindung stehen. Von dort aus kann das Öl dann durch die Kammern 3, die in bekannter Weise mit Turbulenzeinlagen 13 ausgestattet sind, nach rechts fließen und im Sinn des Pfeiles 14 wieder aus dem Wärmetauschkörper 8 austreten.

Kühlmittel wird beim Ausführungsbeispiel jeweils durch die offenen Stirnenden der Kammern 4 im Sinn der Pfeile 15 eintreten und es kann diese Kammern im Sinn der Pfeile 16 wieder verlassen. Dabei besteht durch die Anordnung der Abstandsscheiben 11 eine Abdichtung zwischen Öl und Kühlmittel.

Die Fig. 4 zeigt, daß jeder der Gewinderinge 7 mit der obersten der Scheiben 1 verbunden ist und auf der von seiner Fläche 7a abgewandten Seite einen konzentrischen Kragen 18 besitzt, an dessen Fuß eine kleine umlaufende Nut 19 vorgesehen ist. Der Kragen 18 bildet ferner eine umlaufende, von der Achse 20 des Gewinderinges 7 nach außen schräg abfallende Ringfläche 21, auf deren Bedeutung später noch eingegangen wird. Im Inneren besitzt der Gewindering 7 ein Gewinde 22.

Wie Fig. 5 zeigt, ist in diesen Gewindering eine Hohlschraube 23 eingesetzt, die mit ihrem Flanschteil 24 eine Öffnung 25 in einer Seitenwand 26 eines nicht näher dargestellten Wasserkastens eines Motorkühlers überdeckt. In die Öffnung 25 ist ein Dichtungsring 27 eingesetzt, der von dem Flansch 24 der Hohlschraube 23 gegen die Außenfläche der Abdeckplatte 5 und gegen die Ringfläche 21 des Gewinderinges 7 gedrückt ist. Durch den Dichtungsring 27 kann daher in einfacher Weise eine Abdichtung gegenüber den von Kühlwasser durchströmten Kammern 4 des Wärmetauschkörpers 8 des Getriebeölkühlers und eine Abdichtung zu dem Innenraum 28 des nicht näher gezeigten Wasserkastens erreicht werden. Die Fig. 5 läßt auch gut erkennen, daß die Abdichtscheiben 11 jeweils die aneinanderliegenden Kammern 3 und 4 gegeneinander abdichten, so daß die vorher erwähnte wechselweise Durchströmung der Kammern 3 und 4 von Öl und Kühlmittel erreicht wird.

Die Fig. 5 zeigt auch, daß die Hohlschraube 23 als ein Einsteckstutzen für einen Steckzapfen 29 einer Schnellkupplung ausgebildet ist, die wiederum mit Dichtungsringen am Steckzapfen 29 zur dichten Verbindung mit der Hohlschraube 23 versehen ist. Durch diese Ausgestaltung wird die fertige Montage des Getriebeölkühlers im Wasserkasten ermöglicht. Der Ölanschluß kann später erfolgen.

Die Fig. 6 und 7, in denen für gleiche Teile auch gleiche Bezugszeichen verwendet worden sind, zeigen eine Ausführungsform, die hinsichtlich des verwendeten Dichtringes von jener der Fig. 1 bis 5 abweicht. Anstelle des Dichtringes 27 ist bei der Ausführungsform der Fig. 6 und 7 eine Doppeldichtring 270 vorgesehen, der zwei konzentrisch zueinander angeordnete Toruskörper 30 und 31 aus einem elastischen Material besitzt, die untereinander durch einen Flachring 32 verbunden sind, der mit Durchtrittsöffnungen 33 in der Form von gleichmäßig auf dem Umfang verteilten Langlöchern versehen ist. Dieser Doppeldichtring 270 wird auf einer umlaufenden Ausprägung 34 gehalten, die von dem Außenblech 5 des Getriebeölkühlers im Bereich der Öffnung 25 in der Wand 26 gebildet wird. Auch der Doppelring 270 kann daher bei der Montage des Getriebeölkühles in sehr einfacher Weise von außen eingelegt und zentriert werden und danach, wenn die Hohlschraube 23 angezogen wird, sicher gehalten werden. Bei dieser Ausführungsform sind in dem Flansch 24 umlaufende Bohrungen 35 in dem Bereich vorgesehen, in dem der Verbindungsring 32 vorgesehen ist. Durch diese Ausgestaltung kann Kühlmittel oder auch Getriebeöl, das möglicherweise durch das Gewinde 36 zwischen dem Gewindering 7 und der Hohlschraube 23 durchdringen könnte, dann, wenn es auch noch den inneren Dichtring 31 passiert hat, über die Bohrungen 35 nach außen abgeführt werden, so daß eine Vermischung von Kühlmittel und Öl innerhalb des Getriebeölkühlers ausgeschlossen wird.

Wie vorher erwähnt, sind die Kammern 3 jeweils mit Turbulenzeinlagen 13 versehen. Die Kammern 4 sind mit ähnlichen oder gleichen Turbulenzeinlagen 13' ausgerüstet.

## Patentansprüche

1. Getriebeölkühler mit einem länglichen Wärmetauschkörper (8), der zum Einbau in den Innenraum (28) eines Wasserkastens eines Motorkühlers mit seitlich abragenden Anschlussstutzen versehen ist, die mit je einer Schraubflanschanordnung abgedichtet in einer Öffnung (25) einer Seitenwand (26) des Wasserkastens befestigbar sind,
**dadurch gekennzeichnet, dass**
der Wärmetauschkörper (8) aus mehreren, parallel zueinander ausgerichteten und auf Abstand gehaltenen Platten (1, 2) aufgebaut und nach außen von Endplatten (5, 6) abgedeckt ist, dass eine der Endplatten (5) im Bereich der Öffnung (25) mit ihrer Außenfläche mit der Innenfläche der Seitenwand (26) fluchtet und an ihrer Innenfläche mit einem Gewindering (7) verbunden ist und dass die Schraubflanschanordnung aus dem Gewindering (7) und einer mit diesem verschraubbaren Hohlschraube (23) besteht, die durch die Seitenwand (26) des Wasserkastens ragt und außen mit ihrem einen Flansch (24) bildenden Kopf gegen einen in die Öffnung (25) der Seitenwand (26) eingesetzten Dichtungsring (27; 270) drückt, der sich an der Außenfläche der Endplatte (5) und am Gewindering (7) anlegt.

2. Getriebeölkühler nach Anspruch 1, **dadurch gekennzeichnet, daß** der Dichtungsring (27, 270) an einer Ringfläche (21) des Gewinderinges (7) anliegt.

3. Getriebeölkühler nach Anspruch 1, **dadurch gekennzeichnet, daß** der Dichtungsring (27) auf einem Ansatz (23a) der Hohlschraube (23) aufgeschoben ist und in die Durchführöffnung (25) der Seitenwand (26) hereinragt.

4. Getriebeölkühler nach Anspruch 1, **dadurch gekennzeichnet, daß** der Gewindering (7) unter Zwischenfügung einer Dichtung an der Wand (1) zwischen einer öldurchströmten Kammer (3) und der äußersten vom Kühlmittel durchströmten Kammer (4) des Wärmetauschkörpers (8) angebracht ist.

5. Getriebeölkühler nach Anspruch 1, **dadurch gekennzeichnet, daß** der Gewindering (7) eine umlaufende Nut (19) zum Einsetzen der Endplatte (5) des Wärmetauschkörpers (8) aufweist.

6. Getriebeölkühler nach Anspruch 5, **dadurch gekennzeichnet, daß** die Nut (19) am Fuß eines Dichtkragens (18) des Gewinderinges (7) angeordnet ist, der an seiner Stirnseite eine schräge Ringfläche (21) zur Anlage des Dichtringes (27, 270) bildet.

## Claims

1. Transmission oil cooler with an elongated heat exchanger body (8) provided with laterally projecting connectors for incorporation in the inside space (28) of a water box of an engine cooler, the said connectors each being able to be attached and sealed with a screw flange arrangement in an opening (25) of a sidewall (26) of the water box,
**characterised in that**
the heat exchanger body (8) is formed of several plates (1, 2) directed parallel to one another and held a distance apart and is covered on the outside by end plates (5, 6), one of the end plates (5) in the area of the opening (25) having its outer surface aligned with the inside surface of the sidewall (26) and being connected on its inside surface with a threaded ring (7), and the screw flange arrangement consists of the said threaded ring (7) and a hollow screw (23) that can be screwed into it, which projects through the sidewall (26) of the water box and, on the outside, with its head that forms a flange (24), presses against a sealing ring (27; 270) positioned in the opening (25) of the sidewall (26), the said ring resting in contact with the outer surface of the end plate (5) and on the threaded ring (7).

2. Transmission oil cooler according to Claim 1,
**characterised in that**
the sealing ring (27; 270) rests in contact with an annular surface (21) of the threaded ring (7).

3. Transmission oil cooler according to Claim 1,
**characterised in that**
the sealing ring (27) is fitted onto a shoulder (23a) of the hollow screw (23) and projects into the opening (25) of the sidewall (26).

4. Transmission oil cooler according to Claim 1,
**characterised in that**
the threaded ring (7) is attached, with interposition of a seal, on the wall (1) between a chamber (3) through which oil flows and the outermost of the chambers (4) of the heat exchanger body (8) through which coolant flows.

5. Transmission oil cooler according to Claim 1,
**characterised in that**
the threaded ring (7) has a peripheral groove (19) for positioning the end plate (5) of the heat exchanger body (8).

6. Transmission oil cooler according to Claim 5,
**characterised in that**
the groove (19) is arranged at the foot of a sealing collar (18) of the threaded ring (7), whose front side forms an oblique annular surface (21) for the sealing ring (27; 270) to rest upon.

## Revendications

1. Refroidisseur d'huile de transmission comportant un corps allongé d'échange thermique (8), qui, pour le montage dans l'espace intérieur (28) d'une boîte à eau d'un radiateur de moteur, est équipé d'embouts de raccordement disposés en saillie latéralement, qui peuvent être fixés en étant étanchéifiés respectivement avec un dispositif de bride vissable, dans une ouverture (25) d'une paroi latérale (26) de la boîte à eau, **caractérisé en ce que**
le corps d'échange thermique (8) est constitué de plusieurs plaques (1, 2) qui sont disposées parallèlement entre elles et sont maintenues à distance les unes des autres, et est fermé vers l'extérieur par des plaques d'extrémité (5, 6), que l'une des plaques d'extrémité (5) est alignée, dans la zone de l'ouverture (25), par sa surface extérieure avec la surface intérieure de la paroi latérale (26) et est reliée, au niveau de sa surface intérieure, à une bague filetée (7), et que le dispositif à bride de vissage est constitué par la bague filetée (7) et une vis creuse (23) vissable avec la bague et qui pénètre à travers la paroi latérale (26) de la boîte à eau et comprime extérieurement, par sa tête formant une bride (24), une bague d'étanchéité (27; 270) insérée dans l'ouverture (25) de la paroi latérale (26) et qui s'applique contre la face extérieure de la plaque d'extrémité (5) et contre la bague filetée (7).

2. Refroidisseur d'huile de transmission selon la revendication 1, **caractérisé en ce que** la bague d'étanchéité (27, 270) s'applique contre une face annulaire (21) de la bague filetée (7).

3. Refroidisseur d'huile de transmission selon la revendication 1, **caractérisé en ce que** la bague d'étanchéité (27) est enfilée sur un appendice saillant (23a) de la vis creuse (23) et pénètre dans l'ouverture de traversée (25) de la paroi latérale (26).

4. Refroidisseur d'huile de transmission selon la revendication 1, **caractérisé en ce que** la bague filetée (7) est montée, moyennant le montage intercalé d'une garniture d'étanchéité, contre la paroi (1) entre une chambre (3) traversée par l'huile et la chambre la plus extérieure (4), traversée par le fluide de refroidissement, du corps d'échange thermique (8).

5. Refroidisseur d'huile de transmission selon la revendication 1, **caractérisé en ce que** la bague filetée (7) comporte une gorge circonférentielle (19) prévue pour l'insertion de la plaque d'extrémité (5) du corps d'échange thermique (8).

6. Refroidisseur d'huile de transmission selon la revendication 5, **caractérisé en ce que** la gorge (19) est disposée au pied d'un collet d'étanchéité (18) de la bague filetée (7), lequel forme, sur sa face frontale, une surface annulaire oblique (21) pour l'application de la bague d'étanchéité (27, 270).
